# EUROPEAN PATENT APPLICATION

(11) **EP 4 838 575 A1**
(43) Date of publication of application: **11.11.2026**
(21) Application number: 25752308.4
(22) Date of filing: 23.01.2025
(51) Int. Cl.: H01M 4/36, H01M 4/525, H01M 4/505, H01M 10/052, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 08.02.2024 KR 20240019562
(71) Applicant: LG Chem, Ltd., Seoul 07336 (KR)
(72) Inventor: SON, Min Hee, Daejeon 34122 (KR); LEE, Hyuck, Daejeon 34122 (KR); MOK, Duck Gyun, Daejeon 34122 (KR); OH, Jeong Seon, Daejeon 34122 (KR); KIM, Ji Hye, Daejeon 34122 (KR); LEE, Seul, Daejeon 34122 (KR); CHOI, Song A, Daejeon 34122 (KR); LEE, Cho Hee, Daejeon 34122 (KR); JUNG, Mi Na, Daejeon 34122 (KR); KIM, Joo Eun, Daejeon 34122 (KR)
(74) Representative: Hoffmann Eitle
(86) International application number: PCT/KR2025/001329
(87) International publication number: WO 2025/170260

(57) **Abstract**

The present invention relates to a positive electrode active material, and a positive electrode and a lithium secondary battery comprising same, the positive electrode active material comprising a lithium transition metal oxide and a coating portion including a metal oxide located on the surface of the lithium transition metal oxide, being in the form of a single particle, and capable of improving initial capacity and resistance performance by having an average particle diameter and an average particle diameter ratio satisfying specific ranges.

## Description

### TECHNICAL FIELD

### Cross-reference to Related Applications

This application claims priority from Korean Patent Application No.10-2024-0019562, filed on February 8, 2024, the disclosure of which is incorporated by reference herein.

### Technical Field

The present invention relates to a positive electrode active material, and a positive electrode and a lithium secondary battery including the same.

### BACKGROUND ART

Due to the increase in technological development and demand for mobile devices, demand for secondary batteries as a source of energy is rapidly increasing. Among these secondary batteries, a lithium secondary battery, which has high energy density and high voltage, long cycle lifetime, and low self-discharging rate, is being commercialized and widely used.

Recently, according to technological development of an electric vehicle, etc., demand for a high-capacity secondary battery is increasing, and accordingly, research on a positive electrode using a high-Ni positive electrode active material, which is excellent in capacity characteristics, is being actively conducted.

Since coprecipitation is used in order to prepare the high-Ni positive electrode active material, the prepared high-Ni positive electrode active material has a secondary-particle form in which primary particles are aggregated. However, in the active material having a secondary-particle form, long-term charging and discharging process causes fine cracks in the secondary particle, which cause side reactions, and also, when electrode density is increased for improving the energy density of the secondary particle, structural collapse of the secondary particle is caused, so that there is a disadvantage of reducing the energy density and lifetime characteristics due to decrease in the active material and an electrolyte solution.

To solve the above problems of the high-Ni positive electrode active material in a secondary-particle form, development of a nickel-based positive electrode active material in a single-particle form is recently in progress. In the nickel-based positive electrode active material in a single-particle form, since particle fracture rarely happens even in case of increasing the electrode density for high energy density, and high electrode rolling density may be achieved, there is an advantage in terms of volumetric capacity, and since the rate of gas generation is low, there is an advantage also in terms of cell stability.

However, since the positive electrode active material in a single-particle form has a small specific surface area, an interface reactive to an electrolyte solution is small, and since a path through which lithium ions come from the inside becomes longer, the problems of decreasing the initial discharge capacity and increasing the resistance may be caused.

Therefore, in order to solve the problems, development of a single-particle positive electrode active material having an excellent degree of single-particle formation and improved electrochemical performance is required.

### DISCLOSURE OF THE INVENTION

### TECHNICAL PROBLEM

A task to be solved by the present invention is to provide a positive electrode active material having a single-particle form, wherein electrochemical performance may be improved by controlling a ratio of average particle diameter and/or a degree of single-particle formation through coating.

In addition, a task to be solved by the present invention is to provide a positive electrode having improved electrochemical performance by including the above positive electrode active material.

In addition, a task to be solved by the present invention is to provide a lithium secondary battery having improved electrochemical performance such as initial capacity and resistance performance by including the above positive electrode.

### TECHNICAL SOLUTION

(1) The present invention provides a positive electrode active material including a lithium transition metal oxide; and a coating part formed on a surface of the lithium transition metal oxide, wherein the positive electrode active material has a single-particle form, an average particle diameter (D₅₀) is 3 µm or greater, and 10 µm or less, and a ratio of average particle diameter, calculated by Equation 1 below, is 0.75 or greater.

   [Equation 1] $Ratio of average particle diameter = {D}_{SEM} {/ D}_{50}$
   In Equation 1 above, when the area of particle is calculated through the number of pixels corresponding to each of n (at least 10) particles present in a SEM image, and using a radius value of a circle having the same area as the area of each particle, a particle diameter and a volume of each of the particles, present in the SEM image, are calculated, D_{SEM} is a particle diameter at 50% in a cumulative volume distribution according to the obtained particle diameter, and D₅₀ is a particle diameter at 50% in a cumulative volume distribution according to particle diameter measured through a laser diffraction particle size analysis.
(2) The present invention provides the positive electrode active material of (1) above, wherein the lithium transition metal oxide includes nickel in an amount of 80 mol% or greater on the basis of the total number of moles of transition metal.
(3) The present invention provides the positive electrode active material of (1) or (2) above, wherein the lithium transition metal oxide has a composition represented by Chemical Formula 1 below.

   [Chemical Formula 1] LiₐNi_{b}Co_{c}M¹_{d}M²ₑO₂

   In Chemical Formula 1 above, M¹ is a Mn, Al, or a combination thereof,
   M² is one or more selected from the group consisting of Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and
   0.9≤a≤1.3, 0.8≤b<1, 0<c<0.3, 0<d<0.3, 0≤e≤0.2, and b+c+d+e=1.
(4) The present invention provides the positive electrode active material of any one of (1) to (3) above, wherein the coating part includes one or more metal elements selected from the group consisting of Ni, Co, Mn, Al, B, Ti, Ta, W, and Nb.
(5) The present invention provides the positive electrode active material of any one of (1) to (4) above, wherein the single-particle form is a form of one particle, or a form of a pseudo single particle formed by aggregation of two or more and 30 or less primary particles.
(6) The present invention provides the positive electrode active material of any one of (1) to (5) above, wherein the positive electrode active material has a degree of single-particle formation, calculated by Equation 2 below, of 7.5 µm³ or less. [Equation 2] $\begin{matrix}Degree of single - particle formation \left({μm}^{3}\right) = \\ \frac{{\sum }_{1}^{n} \frac{4 π}{3} \times radius {\left(grain\right)}^{3}}{n}\end{matrix}$
   In Equation 2 above, a radius (grain) is an individual radius (µm) of each of grains having a single-particle cross-sectional size of 0.1 µm or greater, measured from an electron backscatter diffraction (EBSD) analysis on a SEM image of a cross section of a positive electrode prepared with a single-particle positive electrode active material, and n is the number of grains.
(7) The present invention provides the positive electrode active material of (6) above, wherein the degree of single-particle formation is 5.0 µm³ or greater, and 7.5 µm³ or less.
(8) The present invention provides the positive electrode active material of any one of (1) to (7) above, wherein the ratio of average particle diameter is 0.75 or greater, and 1.0 or less.
(9) The present invention provides a positive electrode including the positive electrode active material of any one of (1) to (8) above.
(10) The present invention provides a lithium secondary battery including the positive electrode of (9) above; a negative electrode; a separator disposed between the positive electrode and the negative electrode; and an electrolyte.

### ADVANTAGEOUS EFFECTS

A positive electrode active material of the present invention is a positive electrode active material in a single-particle form, which may include a coating part containing a metal oxide, and a ratio of average particle diameter (D_{SEM} /D₅₀) satisfies a particular range, thereby exhibiting excellent capacity and output characteristics while having low initial resistance.

### BRIEF DESCRIPTION OF THE DRAWINGS

FIG. 1 is a SEM image of a positive electrode active material according to Example 1 of the present application.
FIG. 2 is a SEM image of a positive electrode active material according to Example 2 of the present application.
FIG. 3 is a SEM image of a positive electrode active material according to Example 3 of the present application.
FIG. 4 is a SEM image of a positive electrode active material according to Example 4 of the present application.
FIG. 5 is a SEM image of a positive electrode active material according to Comparative Example 1 of the present application.
FIG. 6 is a Eular map for electron backscatter diffraction (EBSD) of one particle of a positive electrode active material according to Example 1 of the present application.
FIG. 7 is a Eular map for electron backscatter diffraction (EBSD) of one particle of a positive electrode active material according to Example 2 of the present application.
FIG. 8 is a Eular map for electron backscatter diffraction (EBSD) of one particle of a positive electrode active material according to Example 3 of the present application.
FIG. 9 is a Eular map for electron backscatter diffraction (EBSD) of one particle of a positive electrode active material according to Example 4 of the present application.
FIG. 10 is a Eular map for electron backscatter diffraction (EBSD) of one particle of a positive electrode active material according to Comparative Example 1 of the present application.

### MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

In the present invention, the 'single-particle form' is a concept that is contrasted with a secondary-particle positive electrode active material in a spherical shape formed by aggregation of tens to hundreds of primary particles, prepared in a conventional method, and the concept includes a form of two or more and 30 or less primary particles being aggregated. In particular, in the present invention, the positive electrode active material in a single-particle form may have a form of a single particle formed of one primary particle, and may also have a form of a pseudo single particle formed by aggregation of two or more and 30 or less primary particles. At this time, the 'primary particle' refers to a minimum unit of a particle recognizable when the positive electrode active material is observed using a scanning electron microscope.

In the present invention, the term 'average particle diameter (D₅₀)' refers to a particle diameter at 50% in a cumulative volume distribution according to particle diameter. The average particle diameter may be measured in a way that, after powder to be measured is dispersed in a dispersion medium, the dispersion medium is introduced into a commercial laser diffraction particle size measurement instrument (e.g. S3500 of Microtrac), a difference in diffraction pattern by the particle size is measured when the particles pass through a laser beam to calculate the particle size distribution, and the particle diameter at 50% in the cumulative volume distribution according to particle diameter in the measurement instrument is calculated to thereby measure D₅₀.

In the present invention, the term 'D_{SEM} (average particle diameter measured using a SEM image)' refers to a particle diameter which may be measured in a way that the area of particle is calculated through the number of pixels corresponding to each of n (at least 10) particles present in an image at a particular magnification (for example, 2K) among the SEM images, and using the radius value of a circle having the same area as the area of each particle, the particle diameter and volume of each of the particles present in the SEM image are calculated, and then the particle diameter corresponding to a cumulative volume of 50% is calculated therefrom.

Hereinafter, the present invention will be described in more detail in order to assist understanding of the present invention.

### Positive Electrode Active Material

The present invention provides a positive electrode active material including a lithium transition metal oxide; and a coating part formed on a surface of the lithium transition metal oxide, wherein the positive electrode active material has a single-particle form, an average particle diameter (D₅₀) is 3 µm or greater, and 10 µm or less, and a ratio of average particle diameter, calculated by Equation 1 below, is 0.75 or greater. $Ratio of average particle diameter = DSEM / D 50$ Equation 1

In Equation 1 above, when the area of particle is calculated through the number of pixels corresponding to each of n (at least 10) particles present in a SEM image, and using a radius value of a circle having the same area as the area of each particle, a particle diameter and a volume of each particle, present in the SEM image, are calculated, D_{SEM} is a particle diameter at 50% in a cumulative volume distribution according to the obtained particle diameter, and D₅₀ is a particle diameter at 50% in a cumulative volume distribution according to particle diameter measured through a laser diffraction particle size analysis.

The lithium transition metal oxide may include nickel in an amount of 80 mol% or greater on the basis of the total number of moles of transition metal, and particularly, may include nickel in an amount of 85 mol% or greater. That is, the lithium transition metal oxide may be a high-Ni-based lithium transition metal oxide. In this case, a lithium secondary battery including the lithium transition metal oxide may have more improved energy density.

The lithium transition metal oxide may have a composition represented by Chemical Formula 1 below.

[Chemical Formula 1] LiₐNi_{b}Co_{c}M¹_{d}M²ₑO₂

In Chemical Formula 1 above, M¹ is a Mn, Al, or a combination thereof,

M² is one or more selected from the group consisting of Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and
0.9≤a≤1.3, 0.8≤b<1, 0<c<0.3, 0<d<0.3, 0≤e≤0.2, and b+c+d+e=1.

a above refers to a molar ratio of lithium in the lithium transition metal oxide, which may be 0.9 or greater or 1.0 or greater, and 1.3 or less, 1.2 or less, or 1.1 or less.

b above refers to a molar ratio of nickel among the entire transition metal, which may be 0.8 or greater, 0.81 or greater, 0.82 or greater, 0.83 or greater, 0.84 or greater, or 0.85 or greater, and 0.95 or less, 0.93 or less, 0.91 or less, or 0.89 or less.

c above refers to a molar ratio of cobalt among the entire transition metal, which may be greater than 0, 0.02 or greater, 0.04 or greater, 0.06 or greater, 0.08 or greater, or 0.1 or greater, and less than 0.3, 0.28 or less, 0.26 or less, 0.24 or less, 0.22 or less, 0.2 or less, 0.15 or less, or 0.13 or less.

d above refers to a molar ratio of a metal element M¹ among the entire transition metal, which may be greater than 0, 0.01 or greater, 0.02 or greater, 0.03 or greater, or 0.04 or greater, and less than 0.3, 0.25 or less, 0.2 or less, 0.15 or less, 0.1 or less, or 0.05 or less.

M² may be a doping element, and e above refers to a molar ratio of M² among the entire transition metal, which may be 0 or greater, 0.02 or greater, 0.04 or greater, 0.06 or greater, or 0.08 or greater, and 0.2 or less, 0.18 or less, 0.16 or less, 0.14 or less, or 0.12 or less.

The coating part may include one or more metal elements selected from the group consisting of Ni, Co, Mn, Al, B, Ti, Ta, W, and Nb.

The metal element included in the coating part may be in the form of a metal oxide, and particularly, may be in the form of MₓO_{y}, Mₓ(OH)_{y}, etc., and more particularly, in the form of MₓO_{y} (where, M is a metal element). Here, M is a metal element, and x and y values may be determined according to the oxidation number of the metal element.

The coating part is a part formed by dispersion of a coating raw material in the central direction on a surface of the lithium transition metal oxide when the lithium transition metal oxide and the coating raw material are mixed and then heat-treated. Accordingly, composition of the coating part may be similar with the composition of the lithium transition metal oxide included in the positive electrode active material of the present invention, but in the entire metal excluding lithium, the proportion of the metal element included in the coating raw material is higher than that of the lithium transition metal oxide.

When the coating part is formed on the surface of the lithium transition metal oxide, the coating part may be formed on a part of the outer side of the surface, or on the entire surface, and may be formed in 10% or greater and 100% or less (area%) of the total area of the surface. In particular, the coating part may be formed on a part of the surface of the lithium transition metal oxide, and the proportion may be 20% or greater, 30% or greater, 40% or greater, or 50% or greater, and 95% or less, 90% or less, 85% or less, or 80% or less on the basis of the total area of the surface.

The positive electrode active material of the present invention may have a single-particle form, and the single-particle form may be a form of one particle, or a form of a pseudo single particle formed by aggregation of two or more and 30 or less primary particles.

The average particle diameter of the positive electrode active material of the present invention may be, particularly, 3.1 µm or greater, 3.2 µm or greater, 3.3 µm or greater, 3.4 µm or greater, 3.5 µm or greater, 3.6 µm or greater, 3.7 µm or greater, 3.8 µm or greater, or 3.9 µm or greater, and 9 µm or less, 8 µm or less, 7 µm or less, 6 µm or less, 5 µm or less, 4.5 µm or less, 4.4 µm or less, 4.3 µm or less, or 4.2 µm or less.

When the average particle diameter falls within the above ranges, a large specific surface area may be achieved, and therefore, low initial resistance and high capacity may be achieved. When the average particle diameter is smaller than the above range, a particle agglomeration phenomenon may cause slurry gelation when an electrode is prepared, and when the average particle diameter is larger than the above range, a movement path of lithium ions coming from the inside of the particle becomes longer, thereby causing problems of increased initial resistance and decreased capacity.

In the positive electrode active material of the present invention, a ratio of average particle diameter, calculated by Equation 1 above, is 0.75 or greater.

The ratio of average particle diameter is a ratio of D_{SEM} which is an average particle diameter of the positive electrode active material analyzed through a SEM image to D₅₀ which is an average particle diameter of the positive electrode active material measured through a laser diffraction particle size analysis. When comparing a single particle formed of one particle with a particle formed of various small primary particles among the particles having particle sizes in the same or similar range, the D₅₀ values, the average particle diameters measured through a laser diffraction analysis, may be similar, but since D_{SEM} is calculated through the diameter value of one particle, D_{SEM} of the particle formed of various primary particles may be measured smaller as the primary particles are recognized as individual particles. That is, when the value of D_{SEM} is similar with the actual D₅₀, it is predictable that the positive electrode active material particle has a form close to a single particle formed of one particle, not a particle formed by aggregation of various primary particles, and through this, it can be seen that, as the ratio of average particle diameter D_{SEM}/D₅₀ has a value closer to 1, the degree of single-particle formation is higher in the figurative aspect. Therefore, this means that, as the ratio of average particle diameter is closer to 1, the positive electrode active material has a form closer to a single particle.

The ratio of average particle diameter of the positive electrode active material of the present invention may be, particularly, 0.75 or greater, 0.76 or greater, 0.77 or greater, or 0.78 or greater. In addition, the ratio of average particle diameter may be 1.0 or less, and particularly, 0.98 or less, 0.96 or less, 0.94 or less, 0.92 or less, 0.90 or less, 0.88 or less, 0.86 or less, 0.84 or less, or 0.82 or less. When the ratio of average particle diameter falls within the above ranges, the positive electrode active material of the present invention may have low initial resistance and may exhibit excellent capacity characteristics and output characteristics even in a single-particle form, and when the ratio of average particle diameter is smaller than the above range, the initial resistance may be high, and the capacity and output characteristics may be reduced.

In addition, the positive electrode active material of the present invention may have a degree of single-particle formation, calculated by Equation 2 below, of 7.5 µm³ or less. [Equation 2] $\begin{matrix}Degree of single - particle formation \left({μm}^{3}\right) = \\ \frac{{\sum }_{1}^{n} \frac{4 π}{3} \times radius {\left(grain\right)}^{3}}{n}\end{matrix}$

In Equation 2 above, a radius (grain) is an individual radius (µm) of each of grains having a single-particle cross-sectional size of 0.1 µm or greater, measured from an electron backscatter diffraction (EBSD) analysis on a SEM image of a cross section of a positive electrode prepared with a single-particle positive electrode active material, and n is the number of grains (unitless number).

The radius of grain is obtained by calculating the diameter of a circle having the same area as the area formed of hexagon dots having the same crystal direction included in the grain observed by the EBSD measurement. Therefore, this means that, as the degree of single-particle formation calculated by the above equation is higher, the radius of grain obtained as above is larger, indicating that those having the same crystal direction tend to be recognized as one particle.

The degree of single-particle formation may be, particularly, 7.4 µm³ or less, 7.3 µm³ or less, 7.2 µm³ or less, or 7.1 µm³ or less. In addition, the degree of single-particle formation may be 5.0 µm³ or greater, and particularly, 5.1 µm³ or greater, 5.2 µm³ or greater, 5.3 µm³ or greater, 5.4 µm³ or greater, 5.5 µm³ or greater, 5.6 µm³ or greater, 5.7 µm³ or greater, 5.8 µm³ or greater, 5.9 µm³ or greater, or 6.0 µm³ or greater. When the degree of single-particle formation falls within the above ranges, the positive electrode active material of the present invention may have low initial resistance and excellent capacity characteristics and output characteristics even in a single-particle form.

### Preparation Method of Positive Electrode Active Material

The positive electrode active material of the present invention may be prepared through a preparation method in the following.

The preparation method of the positive electrode active material, according to an embodiment of the present invention, includes mixing a transition metal precursor with a lithium raw material and then performing a primary calcination to obtain a primary calcined product (S10); grinding the primary calcined product and then performing a secondary calcination to obtain a secondary calcined product (S20); and grinding the secondary calcined product, then mixing the ground secondary calcined product with a coating raw material, and then performing a heat treatment to form a coating part (S30).

### (S10)

As the transition metal precursor, a commercialized precursor such as nickel-cobalt-manganese-based hydroxide may be purchased and used, or the transition metal precursor may be prepared according to a preparation method of a precursor known in the relevant art.

The transition metal precursor may be prepared, for example, by adding a transition metal aqueous solution, an ammonium cation complex forming agent, and a basic compound to a reactor and agitating to cause a coprecipitation reaction.

The transition metal aqueous solution may be prepared by dissolving a transition metal-containing raw material in a solvent such as water, and for example, may be prepared by dissolving a nickel-containing raw material or a cobalt-containing raw material in water. In addition, as needed, the transition metal aqueous solution may further include a M¹ metal-containing raw material and/or a M² metal-containing raw material.

Meanwhile, the transition metal-containing raw material may be acetate, carbonate, nitrate, halide, sulfide, oxide, or the like of the transition metal.

In particular, the nickel-containing raw material may be, for example, NiO, NiCO₃·2Ni(OH)₂·4H₂O, NiC₂O₂·2H₂O, Ni (NO₃)₂·6H₂O, NiSO₄, NiSO₄·6H₂O, a nickel halide, or a combination thereof.

The cobalt-containing raw material may be, for example, CoSO₄, Co (OCOCH₃)₂·4H₂O, Co (NO₃)₂·6H₂O, CoSO₄·7H₂O, or a combination thereof.

The M¹ metal-containing raw material may be a manganese-containing raw material and/or an aluminum-containing raw material. The manganese-containing raw material may be, for example, Mn₂O₃, MnO₂, Mn₃O₄ MnCO₃, Mn (NO₃)₂, MnSO₄·H₂O, manganese acetate, manganese halide, or a combination thereof, and the aluminum-containing raw material may be, for example, Al₂O₃, Al(OH)₃, Al(NO₃)₃, Al₂(SO₄)₃, (HO)₂AlCH₃CO₂, HOAl (CH₃CO₂)₂, Al(CH₃CO₂)₃, aluminum halide, or a combination thereof. However, Al may not be added to the transition metal aqueous solution, but may be added with a lithium raw material in the performing of calcination to be described later.

The M²-containing raw material may be acetate, carbonate, nitrate, sulfate, halide, sulfide, oxide, or the like of the M² metal.

The amount of each of the transition metal-containing raw materials to be added may be determined in consideration of the molar ratio of transition metals in the positive electrode active material to be finally prepared.

Meanwhile, the ammonium cation complex forming agent may include at least one compound selected from the group consisting of NH₄OH, (NH₄)₂SO₄, NH₄NO₃, NH₄Cl, CH₃COONH₄, and NH₄CO₃, and the above compound may be added to a reactor in the form of a solution where the compound is dissolved in a solvent. At this time, as the solvent, water, or a mixture of water and an organic solvent capable of being mixed uniformly with water (specifically, alcohol, etc.) may be used.

The basic compound may be at least one compound selected from the group consisting of NaOH, KOH, and Ca(OH)₂, the compound may be added to a reactor in the form of a solution where the compound is dissolved in a solvent. At this time, as the solvent, water, or a mixture of water and an organic solvent capable of being mixed uniformly with water (specifically, alcohol, etc.) may be used.

The above-described transition metal aqueous solution, ammonium cation complex forming agent, and basic compound are added in the amount that allows pH of the reaction solution to fall within a desired range.

When a precursor particle is formed in the above-described method, the particle is separated from the reaction solution to obtain a transition metal precursor. For example, the transition metal precursor is separated from the reaction solution by filtering the reaction solution, and then the separated transition metal precursor is washed and dried to obtain the transition metal precursor. At this time, processes such as grinding and/or sorting may also be performed as needed.

The transition metal precursor obtained as previously described may have a composition represented by Chemical Formula 2 below.

[Chemical Formula 2] Ni_{b}Co_{c}M¹_{d}M²ₑ(OH)₂

In Chemical Formula 2 above, descriptions on b, c, d, e, and M¹ and M² may be included in the ranges previously described on Chemical Formula 1.

Next, after the transition metal precursor and the lithium raw material are mixed, primary calcination is performed to form a primary calcined product. At this time, as needed, the aluminum-containing raw material and/or the M² metal element-containing raw material may be mixed and calcined together.

As the lithium raw material, for example, lithiumcontaining sulfate, nitrate, acetate, carbonate, oxalate, citrate, halide, hydroxide, oxyhydroxide, or the like may be used, and more particular examples may include Li₂CO₃, LiNO₃, LiNO₂, LiOH, LiOH·H₂O, LiH, LiF, LiCl, LiBr, LiI, CH₃COOLi, Li₂O, Li₂SO₄, Li₃C₆H₅O₇ or a mixture thereof.

Meanwhile, the lithium raw material may be mixed such that the ratio of the number of moles of lithium, to the total number of moles of transition metal included in the transition metal precursor, becomes 0.9 or greater and 1.1 or less, preferably, 0.95 or greater and 1.07 or less, and more preferably 1 or greater and 1.05 or less. When the ratio of the number of moles of the transition metal precursor and the lithium raw material falls within the above ranges, a layered crystal structure of the positive electrode active material may be well developed, so that a positive electrode material with excellent electrochemical performance may be prepared.

The temperature at which the primary calcination is performed may be 700 °C or higher, and 1000 °C or lower. In particular, the temperature may be 750 °C or higher, 770 °C or higher, 790 °C or higher, 800 °C or higher, 820 °C or higher, 850 °C or higher, or 880 °C or higher, and 990 °C or lower, 980 °C or lower, 970 °C or lower, 960 °C or lower, 950 °C or lower, 940 °C or lower, 930 °C or lower, or 920 °C or lower.

In addition, the duration of the primary calcination may be 5 hours or more, and 35 hours or less, and particularly, 7 hours or more, 9 hours or more, 11 hours or more, 13 hours or more, or 15 hours or more, and 30 hours or less, 28 hours or less, 25 hours or less, 22 hours or less, or 20 hours or less.

In addition, the primary calcination may be performed in an air atmosphere or oxygen atmosphere. In the present invention, the oxygen atmosphere refers to an atmosphere that includes sufficient oxygen for calcination, including the air atmosphere. In particular, the oxygen atmosphere refers to an atmosphere having a higher partial pressure of oxygen than that of the air atmosphere.

When the primary calcination is performed in the above condition, it may be possible to form a lithium transition metal oxide in a single-particle form having excellent electrochemical characteristics. If the temperature at which the primary calcination is performed is too low, primary particles may not grow enough, so that a positive electrode active material in a secondary-particle form, not a single-particle form, may be prepared, and if too large, a rock-salt phase, electrically inactive, may be formed too much in the calcination process, so that a calcined product which is structurally instable and low in crystallinity may be prepared, resulting in deterioration in electrochemical characteristics.

### (S20)

Once the primary calcined product is formed through the primary calcination as previously described, first grinding in which the primary calcined product is ground is performed.

The first grinding may be performed in order to break down the aggregated positive electrode active material, and to appropriately control the particle size and shape of the particles in the positive electrode material, and may be performed using a grinding device well known in the relevant art such as a jet-mill grinder and a ball-mill grinder.

In the first grinding, by appropriately controlling grinding conditions such as the grinding pressure or input rate, it may be possible to control particle size distribution of the lithium transition metal oxide particle, the shape of primary particles, and the like.

For example, the first grinding may be performed at a grinding pressure of 1.5 bar or greater, and 2.5 bar or less, and particularly, 1.6 bar or greater, or 1,7 bar or greater, and 2.4 bar or less, 2.3 bar or less, 2.2 bar or less, 2.1 bar or less, or 2.0 bar or less. When the grinding pressure of the first grinding falls within the above ranges, it is easy to prepare a positive electrode material having a desired ratio of average particle diameter of the primary particles.

In addition, the first grinding may be performed at an input rate of 600 rpm or greater, and 1200 rpm or less, and particularly, 650 rpm or greater, 700 rpm or greater, 750 rpm or greater, 800 rpm or greater, or 950 rpm or greater, and may be performed at an input rate of 1150 rpm or less, 1100 rpm or less, 1050 rpm or less, 1000 rpm or less, or 950 rpm or less. When the input rate of the first grinding falls within the above ranges, it is easy to control D₅₀ of the positive electrode active material and/or the average particle diameter of the primary particles to a desired range.

Next, secondary calcination is performed on the first calcined product ground through the first grinding.

The temperature at which the secondary calcination is performed may be 600 °C or higher, and 1000 °C or lower. In particular, the temperature may be 650 °C or higher, 700 °C or higher, 750 °C or higher, 770 °C or higher, 790 °C or higher, or 800 °C or higher, and 990 °C or lower, 980 °C or lower, 970 °C or lower, 960 °C or lower, 950 °C or lower, or 900 °C or lower.

In addition, the duration of the secondary calcination may be 5 hours or more, and 35 hours or less, and particularly, 7 hours or more, 9 hours or more, 11 hours or more, 13 hours or more, 15 hours or more, 17 hours or more, or 19 hours or more, and 33 hours or less, 30 hours or less, 27 hours or less, 25 hours or less, or 23 hours or less.

In addition, the secondary calcination may be performed in an air atmosphere or oxygen atmosphere.

When the secondary calcination is performed in the above conditions, it may be possible to easily form a positive electrode active material having excellent electrochemical characteristics and having a desired particle size distribution of primary particles.

### (S30)

Next, second grinding, in which the secondary calcined product obtained through the secondary calcination is ground, is performed.

For example, the second grinding may be performed at a grinding pressure of 1.5 bar or greater, and 2.5 bar or less, and particularly, 1.6 bar or greater, or 1.7 bar or greater, and 2.4 bar or less, 2.3 or less, 2.2 bar or less, 2.1 bar or less, or 2.0 bar or less.

In addition, the second grinding may be performed at an input rate of 600 rpm or greater, and 1200 rpm or less, and may be performed at an input rate of, particularly, 650 rpm or greater, 700 rpm or greater, 750 rpm or greater, 800 rpm or greater, or 950 rpm or greater, and may also be performed at an input rate of 1150 rpm or less, 1100 rpm or less, 1050 rpm or less, 1000 rpm or less, or 950 rpm or less. When the input rate of the second grinding falls within the above ranges, it is easy to control D₅₀ of the positive electrode active material and/or the average particle diameter of the primary particles to a desired range.

Next, the secondary calcined product, ground through the second grinding, may be mixed with a coating raw material, and then heat-treated to form a coating part.

The coating raw material may be acetate, carbonate, nitrate, sulfate, halide, sulfide, oxide, or the like, which includes a coating element.

The coating element may be one or more metal elements selected from the group consisting of Ni, Co, Mn, Al, B, Ti, Ta, W, and Nb.

Meanwhile, the mixing may be performed as solid-phase mixing or liquid-phase mixing, and the heat treatment may be performed at an appropriate temperature according to the type of element to be applied. For example, the heat treatment may be performed at a temperature of 400 °C or higher, and 1000 °C or lower. The temperature for the heat treatment may be particularly 450 °C or higher, 500 °C or higher, 550 °C or higher, 600 °C or higher, 620 °C or higher, 640 °C or higher, or 660 °C or higher, and 950 °C or lower, 900 °C or lower, 880 °C or lower, 860 °C or lower, 840 °C or lower, or 820 °C or lower.

The heat treatment may be performed for 5 hours or more, and 25 hours or less in order to increase crystallinity of the coating part, and more particularly, may be performed for 7 hours or more, 9 hours or more, 11 hours or more, or 13 hours or more, and may also be performed for 23 hours or less, 21 hours or less, 19 hours or less, or 17 hours or less.

### Positive Electrode

The present invention provides a positive electrode including the positive electrode active material.

According to an embodiment of the present invention, the positive electrode may include a positive electrode current collector, and a positive electrode active material layer formed on the positive electrode current collector, and the positive electrode active material layer may include the positive electrode active material.

According to an embodiment of the present invention, the positive electrode current collector may include a highly conductive metal, and is not particularly limited as long as it is non-reactive in a voltage range of a battery while the positive electrode active material layer is easily adhered thereto. Examples of the positive electrode current collector may include stainless steel, aluminum, nickel, titanium, calcined carbon, or aluminum or stainless steel that is surface-treated with carbon, nickel, titanium, silver, etc. In addition, the positive electrode current collector may generally have a thickness of 3 µm to 500 µm, and microscopic irregularities may be formed on a surface of the current collector to improve adhesion of the positive electrode active material. For example, the positive electrode current collector may be used in various forms including a film, a sheet, a foil, a net, a porous body, a foam body, a non-woven fabric body, etc.

According to an embodiment of the present invention, the positive electrode active material layer may include, selectively as needed, a conductive material and a binder, together with the positive electrode active material. At this time, the positive electrode active material may be included in an amount of 80 wt% to 99 wt%, and more particularly, 85 wt% to 98.5 wt% on the basis of the total weight of the positive electrode active material layer, and in this range, excellent capacity characteristics may be exhibited.

According to an embodiment of the present invention, the conductive material may be used to provide conductivity to an electrode, and any material may be used in the battery, without particular limitation, as long as it does not cause chemical change and conducts electrons. Specific examples may be graphite such as natural graphite or artificial graphite; a carbon-based material including carbon black, acetylene black, ketjen black, channel black, furnace black, lamp black, thermal black, a carbon fiber, etc.; a powder or fiber of metal including copper, nickel, aluminum, silver, etc.; a conductive tube including carbon nanotube, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 0.1 wt% to 15 wt% on the basis of the total weight of the positive electrode active material layer.

According to an embodiment of the present invention, the binder serves to improve binding between the positive electrode active material particles and adhesion between the positive electrode active material and the current collector. Specific examples may be polyvinylidene fluoride (PVDF), polyvinylidene fluoride-hexafluoropropylene copolymer (PVDF-co-HFP), polyvinylalcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, poly acrylic acid, and a polymer in which hydrogen thereof is substituted with Li, Na, or Ca, or various copolymers thereof, and any one alone or a mixture of two or more thereof may be used. The binder may be included in an amount of 0.1 wt% to 15 wt% on the basis of the total weight of the positive electrode active material layer.

According to an embodiment of the present invention, the positive electrode may be prepared according to a general preparation method for a positive electrode, except that the above-described positive electrode active material is used. In particular, the positive electrode active material, and selectively as needed, a binder, a conductive material, and a dispersant may be dissolved or dispersed in a solvent to prepare a composition for forming a positive electrode active material layer, then the composition may be applied onto a positive electrode current collector and then dried and pressed to prepare the positive electrode, or casting of the composition for forming the positive electrode active material layer may be performed onto a separate support, and a film separated from the support may then be laminated on the positive electrode current collector to thereby prepare the positive electrode.

According to an embodiment of the present invention, the solvent may be a solvent generally used in the relevant art, including dimethyl sulfoxide (DMSO), isopropyl alcohol, N-methylpyrrolidone (NMP), dimethylformamide (DMF), acetone, water, or the like, and any one alone or a mixture of two or more thereof may be used. The amount of the solvent used is sufficient if it dissolves or disperses the positive electrode active material, the conductive material, the binder, and the dispersant therein in consideration of the thickness of the slurry to be applied and the manufacturing yield, and provides a viscosity that allows excellent thickness uniformity upon application for preparation of the positive electrode thereafter.

### Lithium Secondary Battery

The present invention provides a lithium secondary battery including the positive electrode.

According to an embodiment of the present invention, the lithium secondary battery may include the positive electrode; a negative electrode; a separator disposed between the positive electrode and the negative electrode, and an electrolyte. In addition, the lithium secondary battery may selectively further include a battery case that accommodates an electrode assembly of the positive electrode, the negative electrode, and the separator, and a sealing member that seals the battery case.

According to an embodiment of the present invention, the negative electrode may include a negative electrode current collector, and a negative electrode active material layer positioned on the negative electrode current collector.

According to an embodiment of the present invention, the negative electrode current collector is not particularly limited as long as it does not cause chemical change in a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 µm to 500 µm, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fabric body, etc.

According to an embodiment of the present invention, the negative electrode active material layer may include, selectively as needed, a binder and a conductive material, together with the negative electrode active material.

According to an embodiment of the present invention, a compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as SiO_{β}(0<β<2), SnO2, vanadium oxide, and lithium vanadium oxide; or a composite material containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, scaly, spherical, or fibrous natural graphite or artificial graphite, Kish graphite, pyrolytic carbon, mesophase pitch based carbonfiber, meso-carbon microbeads, Mesophase pitches, and high-temperature calcined carbon such as petroleum or coal tar pitch derived cokes. The negative electrode active material may be included in an amount of 80 wt% to 99 wt% on the basis of the total weight of the negative electrode active material layer.

According to an embodiment of the present invention, the binder of the negative electrode active material layer is a component that assists binding between the conductive material, the active material, and the current collector, and generally included in an amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

According to an embodiment of the present invention, the conductive material of the negative electrode active material layer is a component that further improves conductivity of the negative electrode active material, and may be included in an amount of 10 wt% or less, and preferably 5 wt% or less on the basis of the total weight of the negative electrode active material layer. The conductive material may not be particularly limited as long as it does not cause chemical changes in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon; metal powder including aluminum power, nickel powder, etc.; a conductive whisker including zinc oxide, potassium titanate, etc.; a conductive metal oxide including titanium oxide, etc.; a conductive material including a polyphenylene derivative, etc. may be used.

According to an embodiment of the present invention, the negative electrode active material, and selectively as needed, the binder, and the conductive material may be dissolved or dispersed in a solvent to prepare a composition for forming a negative electrode active material layer, then the composition may be applied onto the negative electrode current collector and then dried to prepare the negative electrode, or casting of the composition for forming the negative electrode active material layer may be performed onto a separate support, and a film separated from the support may then be laminated on the negative electrode current collector to thereby prepare the negative electrode.

According to an embodiment of the present invention, the separator separates the negative electrode from the positive electrode, and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength, and selectively may be used in a single-layer or multi-layer structure.

According to an embodiment of the present invention, the electrolyte may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not limited thereto. As a specific example, the electrolyte may include an organic solvent and a lithium salt.

According to an embodiment of the present invention, any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, or the like; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylenecarbonate (EC), propylene carbonate (PC), etc.; an alcohol-based solvent including ethylalcohol, isopropyl alcohol, etc.; nitriles including R-CN (where, R is a linear, branched, or cyclic C2 to 20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred.

According to an embodiment of the present invention, any compound capable of providing lithium ions that are used in a lithium secondary battery may be used for the lithium salt without particular limitation. In particular, negative ions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻, and (CF3_{C}F₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like may be used as the lithium salt. The lithium salt may be used in a concentration range of 0.1 M to 2.0 M. When the concentration of lithium salt falls within the above ranges, the electrolyte may have appropriate conductivity and viscosity, and therefore, excellent performance of the electrolyte may be exhibited, and lithium ions may move effectively.

According to an embodiment of the present invention, in addition to the electrolyte components, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of a battery, suppressing the reduction in battery capacity, improving the discharge capacity of the battery, etc. At this time, the additive may be included in an amount of 0.1 wt% to 5 wt% on the basis of the total weight of the electrolyte.

Since the lithium secondary battery including the positive electrode active material according to the present invention stably exhibits excellent capacity characteristics, output characteristics, and lifetime characteristics, it is useful in the field of mobile devices such as a mobile phone, a laptop computer, and a digital camera, in the field of electric vehicles such as a hybrid electric vehicle (HEV) and an electric vehicle (EV), and the like.

An outer shape of the lithium secondary battery of the present invention is not particularly limited, but may include a cylindrical type using a can, a prismatic type, a pouch type, a coin type, or the like.

The lithium secondary battery according to the present invention may not only be used in a battery cell that is used as a power source of a small device, but may also be preferably used as a unit battery in a medium and large-sized battery module including a plurality of battery cells.

Therefore, according to an embodiment of the present invention, a battery module including the lithium secondary battery as a unit cell and a battery pack including the battery module are provided.

According to an embodiment of the present invention, the battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

### Examples

Hereinafter, the present invention will be described in more detail through examples. However, the following examples are only intended to exemplify the present invention, and the scope of the present invention is not limited thereto.

### Example 1

A transition metal precursor Ni_{0.85}Co_{0.105}Mn_{0.045}(OH)₂ and LiOH were mixed such that the ratio of number of moles of transition metal: Li became 1:1.04, and primary calcination was performed on the mixture at a temperature of 900 °C for 17 hours in an oxygen atmosphere to obtain a primary calcined product.

Thereafter, the primary calcined product was finely ground at room temperature using a jet-mill fine grinder in the conditions of 1.8 bar grinding pressure and 900 rpm input rate.

Next, secondary calcination was performed on the ground primary calcined product at a temperature of 820 °C for 21 hours to obtain a secondary calcined product.

Thereafter, the secondary calcined product was finely ground at room temperature, using a jet-mill fine grinder, in the conditions of 1.8 bar grinding pressure and 900 rpm input rate to obtain a lithium transition metal composite oxide having a composition of Li[Ni_{0.85}Co_{0.105}Mn_{0.045}]O₂.

Next, the lithium transition metal composite oxide obtained as above was finely ground using a jet-mill fine grinder at room temperature in the conditions of 1.8 bar grinding pressure and 900 rpm input rate, and then the ground lithium transition metal composite oxide and Co(OH)₂ as a coating raw material were mixed, and heat-treated at 680 °C for 15 hours to prepare a positive electrode active material in which a coating layer was formed.

### Example 2

A positive electrode active material was prepared in the same method as that of Example 1, except that, after the coating material was mixed, the heat treatment was performed at a temperature of 710 °C.

### Example 3

A positive electrode active material was prepared in the same method as that of Example 1, except that, after the coating material was mixed, the heat treatment was performed at a temperature of 770 °C.

### Example 4

A positive electrode active material was prepared in the same method as that of Example 1, except that, after the coating material was mixed, the heat treatment was performed at a temperature of 800 °C.

### Comparative Example 1

A lithium nickel-based oxide, having the composition of Li [Ni_{0.85}Co_{0.105}Mn_{0.045}]O₂ obtained from the grinding after the secondary calcination according to Example 1, was used as a positive electrode active material.

### Comparative Example 2

A positive electrode active material was prepared in the same method as that of Example 1, except that the temperature for the secondary calcination was changed to 800 °C and the coating was not performed.

### Comparative Example 3

A positive electrode active material was prepared in the same method as that of Example 1, except that, after the secondary calcination, the heat treatment was performed without adding a coating raw material in the coating process.

### Comparative Example 4

A positive electrode active material was prepared in the same method as that of Example 1, except that the temperature for the primary calcination was changed to 890 °C, and in the secondary calcination, TiO₂ was added, as a doping raw material, in an amount of 5000 ppm on the basis of the total weight of the ground primary calcined product, and then the calcination was performed.

### Comparative Example 5

A positive electrode active material was prepared in the same method as that of Example 1, except that the temperature for the primary calcination was changed to 890 °C, and in the secondary calcination, TiO₂ was added, as a doping raw material, in an amount of 4000 ppm on the basis of the total weight of the ground primary calcined product, and then the calcination was performed.

### Experimental Example 1 - Measurement of Ratio of Average Particle Diameter

### 1) Measurement of average particle diameter (D₅₀) through laser diffraction

Particles of each of the positive electrode active materials according to Examples 1 to 4 and Comparative Example 1 were dispersed in a dispersion medium, the dispersion medium was introduced into a laser diffraction measurement instrument (Microtrac MT 3000), and irradiated with 28 kHz ultrasonic waves at an output of 60 W, and then a particle diameter corresponding to a cumulative volume of 50% in the measurement instrument was calculated therefrom.

### 2) Measurement of average particle diameter (D_{SEM}) through SEM image

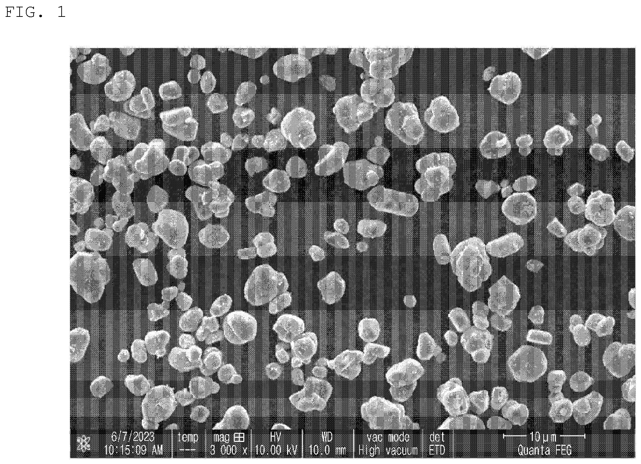

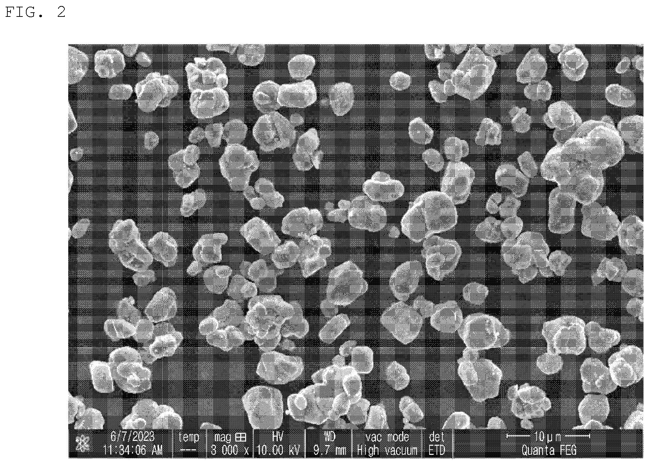

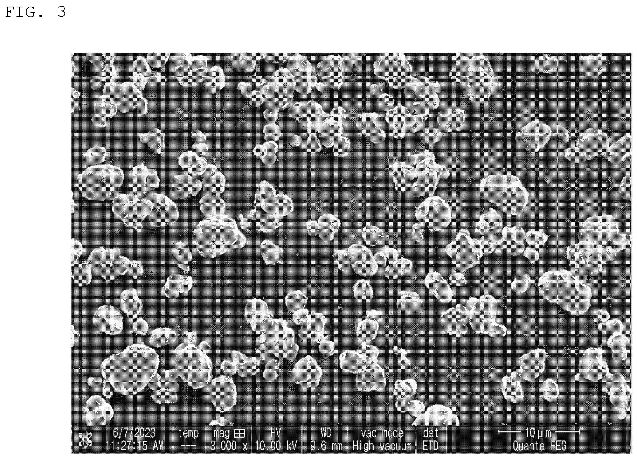

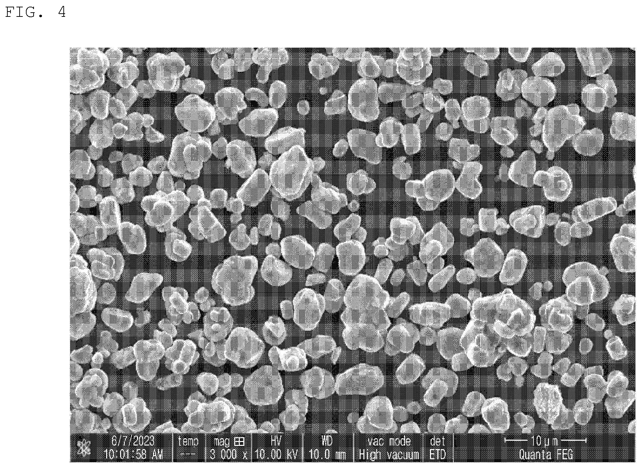

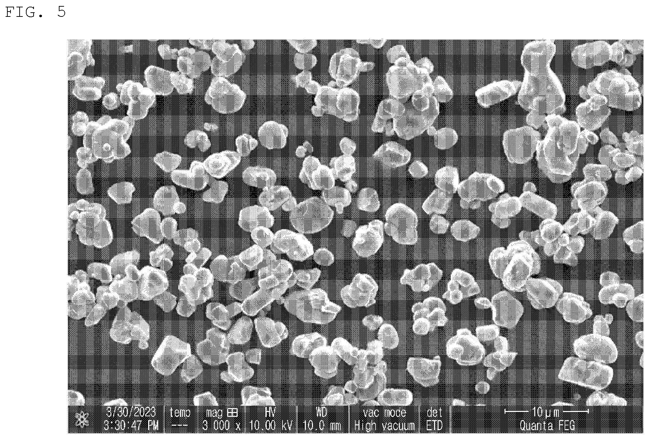

A SEM image (magnification: 3000 times) for each of the positive electrode active materials according to Examples 1 to 4 and Comparative Example 1 was obtained (FIGS. 1 to 5), 5 images among the images were analyzed and then the average value was calculated. In the analysis of each image, the area of particle was calculated through the number of pixels corresponding to each of the particles present in the image, and using a radius value of a circle having the same area as the area of each particle, the particle diameter and volume of each of the particles present in the SEM image were calculated, and a particle diameter corresponding to a cumulative volume of 50% was calculated therefrom.

The above two measurement results of average particle diameter were listed in Table 1 below.

**[Table 1]**

| Classification | D₅₀ (µm) | D_{SEM} (µm) | Ratio of average particle diameter (D_{SEM} / D₅₀) |
|---|---|---|---|
| Example 1 | 4.04 | 3.24 | 0.80 |
| Example 2 | 4.12 | 3.24 | 0.79 |
| Example 3 | 4.07 | 3.20 | 0.79 |
| Example 4 | 4.07 | 3.19 | 0.78 |
| Comparative Example 1 | 4.41 | 3.24 | 0.73 |
| Comparative Example 2 | 4.28 | 3.01 | 0.70 |
| Comparative Example 3 | 4.24 | 3.31 | 0.78 |
| Comparative Example 4 | 4.44 | 2.82 | 0.64 |
| Comparative Example 5 | 4.67 | 2.91 | 0.62 |

As known from the results listed in Table 1 above, the ratios of average particle diameter according to Examples 1 to 4 were higher than those of Comparative Examples 1 and 2 where the coating and heat treatment were not performed, and through this, it can be seen that, due to an additional heat treatment after the secondary calcination, the primary particles aggregated into one particle, thereby further increasing the degree of single-particle formation.

In case of Comparative Example 3, the heat treatment was performed without a coating material after the secondary calcination, so that the coating part was not formed, but the performing of the additional heat treatment caused single-particle formation, and therefore, it can be seen that the ratio of average particle diameter increased, compared to those of Comparative Examples 1 and 2.

In case of Comparative Examples 4 and 5, the coating was performed like in the case of Example 1, but due to low temperature for the primary calcination compared to that of Example 1, particle growth occurred relatively less, and therefore, it can be seen that the ratio of average particle diameter was lower than that of Example 1.

### Experimental Example 2 - Measurement of Degree of Single-Particle Formation

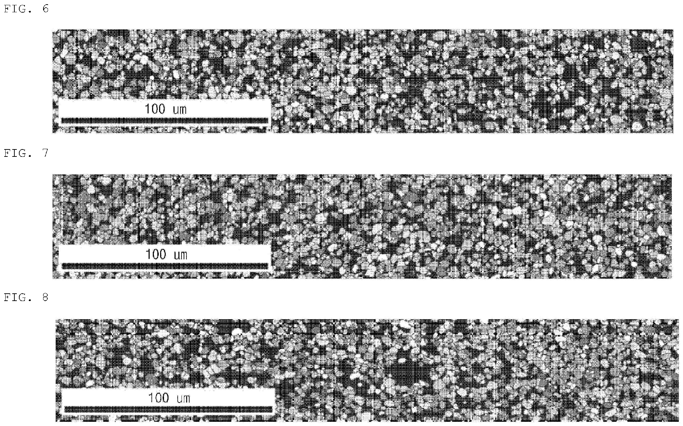

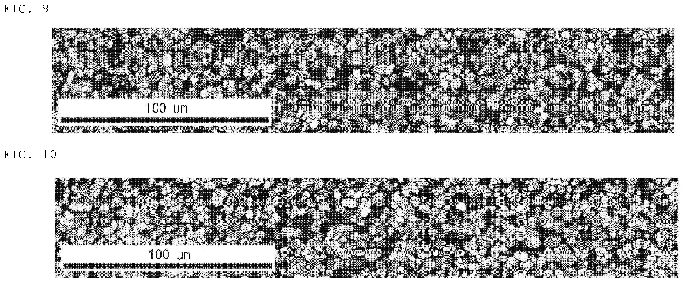

Through a SEM electron backscatter diffraction (EBSD) analysis, the degree of single-particle formation of the positive electrode active material according to each of Examples 1 to 4 and Comparative Examples 1 and 3 was measured. Eular map data for the electron backscatter diffraction (EBSD) of one particle of the positive electrode active material, according to each of Examples 1 to 4 and Comparative Examples 1 and 3, were shown in FIGS. 6 to 10.

For the EBSD analysis, using IM5000 of HITACHI (acceleration voltage: 6 kV), Argon (Ar) ion beam was irradiated to a positive electrode to cut the positive electrode in an ion milling method, then a cross section of the positive electrode was obtained, and using FEI's Quanta 200 - EDAX's Velocity super OIM 8 (acceleration voltage: 20 kV), the cross section of the positive electrode was measured and analyzed. As an image processing-EBSD quantification analysis software, the EDAX OIM Analysis was used.

In the EBSD analysis, the positive electrode was prepared in a way that a positive electrode active material, a carbon black (DenkaBlack of Denka) conductive material, and a PVdF (KF1300 of Kureha) binder were added in an N-methylpyrrolidone (NMP) (Daejung Chemicals and Metals) solvent in a weight ratio of 94.5:3.5:2 to prepare a composition for forming a positive electrode active material layer, then the composition for forming the positive electrode active material layer was applied onto one side of an aluminum foil current collector having a thickness of 20 µm, and dried at a temperature of 130 °C for 3 hours.

Through the SEM EBSD analysis as above, the individual radius (µm) (radius (grain) (µm) for each of grains having a particle cross-sectional size of 0.1 µm or greater was obtained, and the value was substituted for the equation below to calculate the degree of single-particle formation (n is the number of grains). [Equation 2] $\begin{matrix}Degree of single - particle formation \left({μm}^{3}\right) = \\ \frac{{\sum }_{1}^{n} \frac{4 π}{3} \times radius {\left(grain\right)}^{3}}{n}\end{matrix}$

The degree of single-particle formation, calculated by Equation 2 above, was listed in Table 2 below.

**[Table 2]**

| Classification | Degree of single-particle formation |
|---|---|
| Example 1 | 6.65 |
| Example 2 | 7.01 |
| Example 3 | 6.79 |
| Example 4 | 6.35 |
| Comparative Example 1 | 8.30 |
| Comparative Example 3 | 6.29 |

When the degree of single-particle formation was measured by Equation 2 above through the EBSD analysis, portions having the same crystal direction were recognized as one particle. In a case where the heat treatment was performed after the secondary calcination, due to a phenomenon of crystal agglomeration, etc. occurring at one portion inside the particle, the portions recognized as one particle were less than the case where the heat treatment was not performed, so that the degree of single-particle formation tended to be measured lower.

This can be seen also through Table 2, and unlike Examples 1 to 4 where the coating process (additional heat treatment) was performed after the secondary calcination, it can be seen that the degree of single-particle formation according to Comparative Example 1, where such coating process was not performed, was relatively high.

Meanwhile, compared to Examples 1 to 4 and Comparative Example 3 where an additional heat treatment was performed, the degree of single-particle formation according to each of Examples 1 to 4, where the heat treatment was performed with the coating raw material being added together, was higher than that of Comparative Example 3 where the heat treatment was performed without adding a coating raw material, and through this, it can be seen that addition of the coating raw material had an influence on increase of the degree of single-particle formation.

### Experimental Example 3 - Evaluation on Electrochemical Characteristics

### 1) Preparation of positive electrode and coin half-cell

Using the positive electrode active material prepared according to Example 1 above, a carbon black (DenkaBlack of Denka) as a conductive material and PVdF (KF1300 of Kureha) as a binder were added to a solvent (N-methylpyrrolidone (NMP) of Daejung Chemicals and Metals) in a weight ratio (positive electrode active material; conductive material: binder) of 96.5:1.5:2 to prepared a composition for forming a positive electrode active material layer (positive electrode slurry) .

The prepared positive electrode slurry was applied onto one side of an aluminum foil current collector having a thickness of 12 µm, and then dried at 130 °C for 3 hours to form a positive electrode active material layer. Continually, rolling was performed on the positive electrode active material layer, in a roll pressing method, to prepare a positive electrode.

Positive electrodes were prepared in the same method as above using the positive electrode active materials respectively according to Examples 2 to 4 and Comparative Example 1 instead of the positive electrode active material prepared according to Example 1.

A lithium metal was used as a negative electrode together with the prepared positive electrode, and a porous polyethylene separator was disposed between the positive electrode and the negative electrode to prepare an electrode assembly, and the electrode assembly was positioned inside a case, and then an electrolyte solution was injected into the case to prepare a coin half-cell. At this time, lithium hexafluorophosphate (LiPF₆) at a concentration of 1.0 M was dissolved in an organic solvent formed of ethylene carbonate/ ethylmethylcarbonate/ diethylcarbonate (the mixed volume ratio of EC:DMC:EMC = 3:4:3) to prepare the electrolyte solution.

### 2) Evaluation Method for Electrochemical Characteristics

The coin half-cells prepared as above were charged at 25 °C with a constant current (CC) of 0.1 C to 4.3 V, then charged with a constant voltage (CV) until the charging current reached 0.05 C (cut-off current), and the charge capacity was measured. Thereafter, the coin half-cells were left for 20 minutes, and then discharged with a constant current of 0.05 C to 2.5 V to measure a discharge capacity at the first cycle. The efficiency was also measured by dividing the discharge capacity by the charge capacity. The coin half-cells were fully charged in the same method, a discharge current of 0.05 C was applied for 60 seconds, and the difference between the voltage immediately before the applying of the current and the voltage after 60 seconds was divided by the current to measure the initial resistance (DCIR).

The results of evaluating the electrochemical characteristics were listed in Table 3 below.

**[Table 3]**

| Classification | Charge capacity (mAh) | Discharge capacity (mAh) | Efficiency (%) | Initial resistance (Ω) |
|---|---|---|---|---|
| Example 1 | 230.7 | 212.3 | 92.0 | 19.5 |
| Example 2 | 230.2 | 212.6 | 92.4 | 18.7 |
| Example 3 | 229.4 | 212.4 | 92.6 | 18.3 |
| Example 4 | 228.9 | 211.8 | 92.5 | 19.1 |
| Comparative Example 1 | 229.1 | 208.6 | 91.1 | 21.6 |
| Comparative Example 2 | 230.4 | 209.0 | 90.7 | 20.6 |
| Comparative Example 3 | 230.8 | 210.6 | 91.2 | 20.5 |
| Comparative Example 4 | 228.2 | 207.8 | 91.0 | 19.1 |
| Comparative Example 5 | 228.4 | 208.4 | 91.2 | 18.2 |

Referring to Table 3 above, according to Examples 1 to 4, the charge capacities had a level similar with or slightly higher than those of Comparative Examples 1 and 2 where the coating (additional heat treatment) was not performed, but due to the additional heat treatment, the single-particle formation was done in a level significantly higher than those of Comparative Examples 1 and 2, and through this, it can be seen that the discharge capacity absolutely increased, thereby increasing also the efficiency and decreasing the initial resistance.

In addition, when comparing the examples with Comparative Example 3 where the additional heat treatment was performed, but performed without a coating raw material added, so that the coating part was not formed, it can be seen that the charge capacities according to Examples 1 to 4 and Comparative Example 3 had a similar level, but since the discharge capacity was improved to an excellent level and the efficiency increased, and also the initial resistance was reduced, the positive electrode active materials according to Examples 1 to 4 had significantly excellent electrochemical characteristics.

When comparing the examples with Comparative Examples 4 and 5 where the coating was performed, but due to lower temperature for the primary calcination than those of the examples, particle growth occurred relatively less, so that the ratio of average particle diameter was lower than those of the examples, it can be seen that both of the charge capacities and discharge capacities according to Examples 1 to 4 increased, compared to those of Comparative Examples 4 and 5, and the efficiency and initial resistance were at an equal level of advantage.

## Claims

1. A positive electrode active material, comprising:
a lithium transition metal oxide; and
a coating part formed on a surface of the lithium transition metal oxide,
wherein the positive electrode active material has a single-particle form,
an average particle diameter (D₅₀) is 3 µm or greater, and 10 µm or less, and
a ratio of average particle diameter, calculated by Equation 1 below, is 0.75 or greater: [Equation 1] $Ratio of average particle diameter = {D}_{SEM} {/ D}_{50}$
where, in Equation 1 above, when an area of particle is calculated through the number of pixels corresponding to each of n (at least 10) particles present in a SEM image, and using a radius value of a circle having the same area as the area of each particle, a particle diameter and a volume of each of the particles, present in the SEM image, are calculated, D_{SEM} is a particle diameter at 50% in a cumulative volume distribution according to the obtained particle diameter, and
D₅₀ is a particle diameter at 50% in a cumulative volume distribution according to particle diameter measured through a laser diffraction particle size analysis.

2. The positive electrode active material of claim 1, wherein the lithium transition metal oxide comprises nickel in an amount of 80 mol% or greater on the basis of a total number of moles of transition metal.

3. The positive electrode active material of claim 1, wherein the lithium transition metal oxide has a composition represented by Chemical Formula 1 below:
[Chemical Formula 1] LiₐNi_{b}Co_{c}M¹_{d}M²ₑO₂
where, in Chemical Formula 1 above, M¹ is Mn, Al, or a combination thereof,
M² is one or more selected from the group consisting of Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and
0.9≤a≤1.3, 0.8≤b<1, 0<c<0.3, 0<d<0.3, 0≤e≤0.2, and b+c+d+e=1.

4. The positive electrode active material of claim 1, wherein the coating part comprises one or more metal elements selected from the group consisting of Ni, Co, Mn, Al, B, Ti, Ta, W, and Nb.

5. The positive electrode active material of claim 1, wherein the single-particle form is a form of one particle, or a form of a pseudo single particle formed by aggregation of two or more and 30 or less primary particles.

6. The positive electrode active material of claim 1, wherein the positive electrode active material has a degree of single-particle formation, calculated by Equation 2 below, of 7.5 µm³ or less: [Equation 2] $\begin{matrix}Degree of single - particle formation \left({μm}^{3}\right) = \\ \frac{{\sum }_{1}^{n} \frac{4 π}{3} \times radius {\left(grain\right)}^{3}}{n}\end{matrix}$ where, in Equation 2 above, a radius (grain) is an individual radius (µm) of each of grains having a single-particle cross-sectional size of 0.1 µm or greater, measured from an electron backscatter diffraction (EBSD) analysis on a SEM image of a cross section of a positive electrode prepared with a single-particle positive electrode active material, and n is the number of grains.

7. The positive electrode active material of claim 6, wherein the degree of single-particle formation is 5.0 µm³ or greater, and 7.5 µm³ or less.

8. The positive electrode active material of claim 1, wherein the ratio of average particle diameter is 0.75 or greater, and 1.0 or less.

9. A positive electrode comprising the positive electrode active material of any one of claims 1 to 8.

10. A lithium secondary battery, comprising:
the positive electrode of claim 9;
a negative electrode;
a separator disposed between the positive electrode and the negative electrode; and
an electrolyte.
